# EUROPÄISCHE PATENTSCHRIFT

(11) **EP 3 067 465 B1**
(45) Veröffentlichungstag und Bekanntmachung des Hinweises auf die Patenterteilung: **29.11.2017**
(21) Anmeldenummer: 16159757.0
(22) Anmeldetag: 11.03.2016
(51) Int. Cl.: E01B 9/66

(54) **VERBINDUNGSVORRICHTUNG**
CONNECTING DEVICE
DISPOSITIF DE CONNEXION

(30) Priorität: 11.03.2015 AT 501932015
(43) Veröffentlichungstag der Anmeldung: 14.09.2016
(73) Patentinhaber: GAP Management Ltd, 1309 Sofia (BG)
(72) Erfinder: GUENTCHEV, Hristo, 1309 Sofia (BG)
(74) Vertreter: Sonn & Partner Patentanwälte

(56) Entgegenhaltungen:
- EP-A2- 0 278 252
- AT-U2- 7 942
- US-A- 3 517 883
- US-A- 4 715 533

## Beschreibung

Die Erfindung betrifft eine einstellbare Verbindungsvorrichtung mit einem ein Langloch aufweisenden Konstruktionselement, welches Langloch randseitig eine Innenverzahnung aufweist, und mit einem in das Langloch an unterschiedlichen Positionen seiner Längserstreckung einsetzbaren Verstellkörper mit einer zum Eingriff in die Innenverzahnung ausgebildeten Außenverzahnung. Das Konstruktionselement ist daher vorzugsweise plattenförmig ausgebildet.

Verbindungsvorrichtungen der oben genannten Art sind aus dem Stand der Technik bekannt und dienen der verstellbaren Verbindung eines Verstellkörpers mit einem Konstruktionselement, indem der Verstellkörper an verschiedenen Positionen stabil und zuverlässig in das Konstruktionselement einsetzbar ist. Sowohl das Konstruktionselement als auch der Verstellkörper sind zweckmäßig mit Bauteilen verbunden, welche beispielsweise im Maschinenbau oder im Bauwesen Einsatz finden. Die Schrittweite mit welcher der Verstellkörper in Bezug auf das Konstruktionselement in seiner Position festgelegt werden kann, hängt hierbei von der Feinheit der Verzahnungen ab, mit welchen die zu verbindenden Teile, d.h. der Verstellkörper und das Konstruktionselement, ineinander greifen. Hinsichtlich der Herstellung der zu verbindenden Teile ist es günstig, wenn diese möglichst kostengünstig gefertigt werden können, was jedoch i.a. einen relativ großen Abstand zwischen den Zähnen der einzelnen Verzahnungen mit sich bringt. Demgegenüber wäre, um den Verstellkörper in möglichst geringen Abstufungen im Konstruktionselement positionieren zu können, ein möglichst kleiner Abstand der Zähne erforderlich.

Um beide Anforderungen zu erfüllen, sind Vorrichtungen bekannt, welche im Verstellkörper eine außerhalb seiner Mitte vorgesehene Durchgangsöffnung aufweisen, sodass bei Verschwenken oder Kippen des Verstellkörpers um 180° der Verstellkörper zwar seine Gesamtposition beibehält, die Durchgangsöffnung jedoch ihre Position gegenüber dem Konstruktionselement in der Längsrichtung des Langlochs ändert.

Aus der DE 23 47 794 A1 ist eine Befestigungsvorrichtung für Schienen auf Schwellen bekannt, welche Unterlagsplatten mit Aussparungen und darin einsetzbaren Passstücken vorsieht. Die Passstücke können unterschiedlich positionierte exzentrische Bohrungen zur Aufnahme von Schwellenschrauben besitzen. Nachteilig ist hierbei, dass zahlreiche Passstücke erforderlich sind, wenn die Schwellenschrauben, oder allgemein ein Bauteil, an einer Vielzahl unterschiedlicher Positionen in Bezug zu einem anderen Bauteil festgelegt werden soll.

Die AT 007 942 U2 betrifft eine Einrichtung zum Positionieren von Schienen oder anderen Gleisteilen an Schwellen und sieht eine Grundplatte vor, welche über Schrauben mit einer Betonrahmenschwelle verschraubt ist, wobei die Grundplatte ein quer zur Schienenlängsrichtung verlaufendes Langloch mit gezahnter bzw. gewellter Innenkontur aufweist. In dieses Langloch greift ein mit einer Rippenplatte verbundener Zuganker derart formschlüssig ein, dass die Rippenplatte an mehreren Positionen quer zur Schienenlängsrichtung festgelegt werden kann. Auf Grund der speziellen Formgebung des Zugankers und der einander gegenüberliegenden Anordnung von Wellenbergen und Wellentälern der Innenkontur kann der Zuganker, indem er um 180° verschwenkt wird, jeweils um eine halbe Distanz aufeinanderfolgender Wellenberge im Langloch verschoben werden. Demnach kann der Zuganker, oder allgemeiner ein Verstellkörper, nur in entsprechend groben Schritten verstellt werden.

Die US 4,715,533 offenbart eine verstellbare Vorrichtung zur Befestigung von Schienen auf einer Stützstruktur. Für die Verstellung der Vorrichtung quer zur Schiene sind in einer mit der Stützstruktur zu verbindenden Platte rechteckige Öffnungen vorgesehen, welche einander gegenüberliegende verzahnte Seiten aufweisen. In diese Öffnungen werden mit der Stützstruktur verschraubbare Passstücke eingesetzt, welche zu den Zähnen der Öffnungen korrespondiere Zähne aufweisen. Die gegenüberliegenden Zähne sind um jeweils einen halben Zahnabstand zueinander versetzt, sodass die Passstücke entweder um ganze Zahnabstände versetzt oder nach Drehen der Passstücke um 180° um halbe Zahnabstände versetzt in die Platte eingesetzt werden können. Die Schiene kann somit nur in entsprechend groben Schritten verstellt werden.

Die US 3,517,883 betrifft einen längs einer Schwelle verstellbaren Schienenanker, der eine Ankerplatte mit Langlöchern und mit bodenseitigen Kerben auf beiden Seiten der Langlöcher aufweist. In die Langlöcher einsetzbare Ankerbolzen weisen einen Ring mit Zähnen an der Oberseite auf, welche in die Kerben der Ankerplatte eingreifen. Die Kerben und die Zähne sind voneinander im gleichen Maß beabstandet, wobei aber die Zähne des Rings um ein Viertel dieses Abstands gegenüber der Ringmitte versetzt sind. Somit kann durch Drehen des Rings um 180° der Schienenanker um den halben Zahnabstand versetzt werden. Auch diese Konstruktion gewährleistet nur eine sehr beschränkte Verstellmöglichkeit.

Aus der EP 0 278 252 A2 geht eine Ankerschiene mit einem Längsschlitz hervor, welcher an seinen gegenüberliegenden Rändern Zahnreihen aufweist. In den Längsschlitz ist ein Schraubenbolzen mit einer Rastplatte einsetzbar, welche in die Zahnreihen eingreifende Zähne aufweist. Wenn die Zahnung der Rastplatte um eine halbe Zahnteilung zu der Zahnung der Ankerschiene versetzt ist, kann der Schraubenbolzen in Längsrichtung der Ankerschiene durch Drehen um 180° um eine halbe Zahnteilung versetzt werden. Auch hier ist daher nur eine beschränkte Verstellmöglichkeit gegeben.

Es ist nun Aufgabe der Erfindung, eine einstellbare Verbindungsvorrichtung wie eingangs angegeben zu schaffen, welche eine Verstellung des Verstellkörpers in Bezug zum Konstruktionselement mit möglichst feiner Abstufung, d.h. mit möglichst kleinen Einstellschritten ermöglicht. Die Verbindungsvorrichtung soll zudem einfach konstruiert und mit geringem Kostenaufwand herstellbar sein, wobei eine stabile Aufnahme des Verstellkörpers im Konstruktionselement auch unter Einwirkung großer auf den Verstellkörper oder das Konstruktionselement wirkender Kräfte gewährleistet sein soll.

Hierfür sieht die Erfindung eine einstellbare Verbindungsvorrichtung wie in Anspruch 1 definiert vor. Vorteilhafte Ausführungsformen und Weiterbildungen sind in den abhängigen Ansprüchen angegeben.

Gemäß der Erfindung ist vorgesehen, dass die einstellbare Verbindungsvorrichtung ein Konstruktionselement mit einem Langloch und einen Verstellkörper aufweist, welcher an unterschiedlichen Positionen in das Langloch einsetzbar ist. Um den Verstellkörper stabil zu positionieren, weist dieser eine Außenverzahnung auf, welche ausgebildet ist, in eine randseitig im Langloch vorgesehene Innenverzahnung des Konstruktionselements einzugreifen. Das Langloch ist hierbei eine Durchgangsöffnung oder zumindest eine Vertiefung im Konstruktionselement, welche im Unterschied zu einer Durchgangs- oder Sackbohrung in senkrechter Richtung zur Durchgangsöffnung oder Vertiefung eine über den Radius einer Durchgangs- oder Sackbohrung hinausgehende (Längs-)Erstreckung aufweist. Der Verstellkörper kann somit, indem er in das Langloch eingesetzt wird, in grober Abstufung, in Schrittweiten, die dem Anstand der Zähne der Innenverzahnung entsprechen, gegenüber dem Konstruktionselement verstellt werden.

Um darüber hinaus die Position des Verstellkörpers im Langloch in feinerer Abstufung gegenüber dem Konstruktionselement verstellen zu können, ist der Verstellkörper ausgebildet, durch seine Verdrehung eine Verschiebung im Langloch zu erzielen. Hierfür ist der Verstellkörper mit einer spezifischen Außenverzahnung ausgebildet und in mehr als zwei Winkelpositionen bezogen auf seine Drehachse im Langloch einsetzbar geformt. Insbesondere weist seine Außenverzahnung Zähne entlang eines gedachten bzw. virtuellen, im Wesentlichen regelmäßigen Vielecks um die Mitte des Verstellkörpers auf. Die Form des Vielecks kann, beispielsweise konstruktionsbedingt, von einer exakt regelmäßigen, z.B. vier- oder sechseckigen Kontur abweichen, solange ein stabiles und zuverlässiges Einsetzen des Verstellkörpers im Langloch gewährleistet ist. Die Anordnung der Zähne entlang des Vielecks ist zudem unabhängig von der Umfangskontur des Verstellkörpers zwischen den Zähnen, und die Zähne müssen zudem nicht gleichförmig ausgebildet sein. Es genügt, dass zumindest ein Teil jenes Bereichs der Zähne, welcher mit der Innenverzahnung des Langlochs des Konstruktionselements in Berührung kommen kann, entlang des Vielecks verläuft. Für den Eingriff in die Innenverzahnung des Langlochs ist jeder Seitenfläche des Vielecks zumindest ein Zahn zugeordnet, wobei zumindest ein Zahn, der einer Seitenfläche zugeordnet ist, und zumindest ein Zahn, der einer gegenüberliegenden bzw. hierzu parallelen Seitenfläche des Vielecks zugeordnet ist, eine Zahngruppe definieren. Damit nun eine Verdrehung des Verstellkörpers einer Verschiebung des im Langloch eingesetzten Verstellkörpers um einen jeweiligen Differenzbetrag entspricht, ist die Zahngruppe eines Paars einander gegenüberliegender bzw. zueinander paralleler Seitenflächen des Vielecks im Vergleich zu einer Zahngruppe zumindest eines anderen Paars von einander gegenüberliegenden Seitenflächen des Vielecks in einem unterschiedlichen, um den jeweiligen Differenzbetrag voneinander abweichenden Abstand von einer jeweiligen Normalen angeordnet, die durch die Mitte des Verstellkörpers auf die jeweiligen Seitenflächen des Vielecks verläuft. Die Zahngruppen sind somit zumindest an zwei Paaren von einander gegenüberliegenden Seitenflächen des Vielecks um einen unterschiedlichen Betrag von der Mitte des Verstellkörpers versetzt angeordnet. Es ist auch möglich, dass eine Zahngruppe oder wenigstens ein Zahn der Zahngruppe auf der Höhe der Mitte des Verstellkörpers und somit um einen Betrag gleich null versetzt vorgesehen ist. Der Verstellkörper kann daher im Falle eines N-eckigen Vielecks durch Verdrehen in "N" verschiedenen Winkelpositionen in das Langloch eingesetzt werden, wodurch er zumindest drei verschiedene Positionen in Richtung der Längserstreckung des Langlochs einnehmen kann.

Die Erfindung ermöglicht somit bei einer Verdrehung des Verstellkörpers zu durch ein Versetzen des Verstellkörpers in Längsrichtung zusätzliche Einstellpositionen und daher eine feine Abstufung der Einstellung bzw. kleinere Einstellschritte. Da die Innenverzahnung des Langlochs dennoch grob, mit vergleichsweise großem Zahnabstand, ausgebildet sein kann, können die Herstellungskosten für das Konstruktionselement gering gehalten werden, während die etwas komplexere Ausbildung des Verstellkörpers die feinere Abstufung gewährleistet. Die grobe Ausbildung der Innenverzahnung stellt auch dann ein hohes Maß an Zuverlässigkeit der Verbindung sicher, wenn große Kräfte auf die Verbindung wirken.

Gemäß einer bevorzugten Ausführungsform der Erfindung ist vorgesehen, dass die Zahngruppen aller Paare von einander gegenüberliegenden Seitenflächen des Vielecks in unterschiedlichen, um einen jeweiligen Differenzbetrag voneinander abweichenden Abständen von den durch die Mitte des Verstellkörpers verlaufenden Normalen auf die Seitenflächen des Vielecks angeordnet sind. Demnach sind die Zahngruppen oder die den jeweiligen Seitenflächen zugeordneten Außenverzahnungen jedes Paars von einander gegenüberliegenden Seitenflächen des Vielecks, im Folgenden auch Seitenflächenpaar genannt, um einen anderen Differenzbetrag bezüglich der Mitte des Verstellkörpers versetzt, verglichen mit den Zahngruppen oder Außenverzahnungen aller anderen Seitenflächenpaare. Der Verstellkörper kann somit vorteilhafter Weise im Falle eines N-eckigen Vielecks durch Verdrehen in "N" verschiedenen Winkelpositionen in das Langloch eingesetzt werden, wodurch er zumindest N-1 verschiedene Positionen in Richtung der Längserstreckung des Langlochs einnehmen kann.

Wenn die Innenverzahnung entlang der Längserstreckung des Langlochs gleichmäßig beabstandete Zähne mit einem vom jeweiligen Differenzbetrag verschiedenen Zahnabstand aufweist, kann einerseits das Konstruktionselement kostengünstig hergestellt werden, während andererseits der vom jeweiligen Differenzbetrag abweichende Zahnabstand ermöglicht, dass der Verstellkörper durch jede geeignete Verdrehung an einer anderen als durch eine bloße Längsverschiebung erzielbare Position im Langloch festgelegt wird.

Um ausgehend von den durch Verschieben des Verstellkörpers erzielbaren Positionen in Längsrichtung des Langlochs gleichmäßige Positionsänderungen des Verstellkörpers durch sein Verdrehen zu ermöglichen, ist es zweckmäßig, wenn der jeweilige Differenzbetrag gleich dem Zahnabstand der Innenverzahnung dividiert durch die Anzahl der Seitenflächen des Vielecks ist. So kann beispielsweise im Falle eines N-eckigen Vielecks der Verstellkörper mit jeder geeigneten Drehung um ein "N-tel" des Zahnabstands gegenüber der durch Verschieben erzielbaren Position versetzt positioniert werden.

Um jedoch den Verstellkörper im Wesentlichen entlang des gesamten Langlochs durch Verschieben und Verdrehen in gleichmäßigen Abständen verstellen zu können, ist es günstig, wenn zumindest ein Zahn einer Zahngruppe in einem Abstand gleich dem Zahnabstand der Innenverzahnung dividiert durch die doppelte Anzahl der Seitenflächen von der durch die Mitte des Verstellkörpers verlaufenden Normalen auf die der Zahngruppe zugeordneten Seitenflächen angeordnet ist. Wenn zumindest ein Zahn einer Zahngruppe auf diese Weise angeordnet ist, ergeben sich aufgrund der gleichmäßigen Differenzbeträge und der gleichmäßig beabstandeten Zähne der Innenverzahnung auch die Positionen der anderen Zähne bzw. Zahngruppen der Außenverzahnung.

In einer besonders einfachen und zweckmäßigen Ausführungsform kann vorgesehen sein, dass das Vieleck ein regelmäßiges Viereck ist, zwei Zähne einer ersten Zahngruppe, die gegenüberliegenden Seitenflächen eines ersten Paars paralleler Seitenflächen des Vielecks zugeordnet sind, einen Abstand von einem Achtel des Zahnabstands der Innenverzahnung zu der durch die Mitte des Verstellkörpers verlaufenden Normalen auf die der ersten Zahngruppe zugeordneten Seitenflächen aufweisen, und zwei Zähne einer zweiten Zahngruppe, die gegenüberliegenden Seitenflächen eines zweiten Paars paralleler Seitenflächen des Vielecks zugeordnet sind, einen Abstand von drei Achtel des Zahnabstands der Innenverzahnung zu der durch die Mitte des Verstellkörpers verlaufenden Normalen auf die der zweiten Zahngruppe zugeordneten Seitenflächen aufweisen. Dies ermöglicht es, den Verstellkörper, ausgehend von einer durch sein Verschieben einstellbaren Position, durch Verdrehen, in beiden Richtungen entlang der Längserstreckung des Langlochs um jeweils ein Achtel und drei Achtel des Zahnabstands der Innenverzahnung zu verstellen.

In einer weiteren zweckmäßigen Ausführungsform kann vorgesehen sein, dass das Vieleck ein regelmäßiges Sechseck ist, zwei Zähne einer ersten Zahngruppe, die gegenüberliegenden Seitenflächen eines ersten Paars paralleler Seitenflächen des Vielecks zugeordnet sind, einen Abstand von einem Zwölftel des Zahnabstands der Innenverzahnung zu der durch die Mitte des Verstellkörpers verlaufenden Normalen auf die der ersten Zahngruppe zugeordneten Seitenflächen aufweisen, zwei Zähne einer zweiten Zahngruppe, die gegenüberliegenden Seitenflächen eines zweiten Paars paralleler Seitenflächen des Vielecks zugeordnet sind, einen Abstand von drei Zwölftel des Zahnabstands der Innenverzahnung zu der durch die Mitte des Verstellkörpers verlaufenden Normalen auf die der zweiten Zahngruppe zugeordneten Seitenflächen aufweisen, und zwei Zähne einer dritten Zahngruppe, die gegenüberliegenden Seitenflächen eines dritten Paars paralleler Seitenflächen des Vielecks zugeordnet sind, einen Abstand von fünf Zwölftel des Zahnabstands der Innenverzahnung zu der durch die Mitte des Verstellkörpers verlaufenden Normalen auf die der dritten Zahngruppe zugeordneten Seitenflächen aufweisen. Dies ermöglicht, den Verstellkörper, ausgehend von einer durch sein Verschieben einstellbaren Position, durch Verdrehen, in beiden Richtungen entlang der Längserstreckung des Langlochs um jeweils ein Zwölftel, drei Zwölftel oder fünf Zwölftel des Zahnabstands der Innenverzahnung zu verstellen.

Um den Verstellkörper in einer dem regelmäßigen Vieleck zugeordneten axialen Richtung am Konstruktionselement zu fixieren, bzw. eine Lösung der Verbindung mit dem Konstruktionselement in einer axialen Richtung zu vermeiden, kann vorgesehen sein, dass der Verstellkörper ein im Wesentlichen parallel zu einer von der Außenverzahnung aufgespannten gedachten Ebene angeordnetes Halteelement, insbesondere eine Halteplatte oder Haltestifte, aufweist, dessen bzw. deren Erstreckung im in das Langloch eingesetzten Zustand zumindest teilweise über den Umfang des Langlochs hinausreicht. Das Halteelement kann somit ähnlich wie der Kopf einer Schraube an oder nahe der Außenverzahnung ausgebildet sein und sich über diese Außenverzahnung, d.h. über den Umfang bzw. die Breite des Langlochs hinaus, erstrecken. Auf diese Weise kann der in das Konstruktionselement eingesetzte Verstellkörper zumindest nicht in die dem Halteelement entgegengesetzte Richtung aus dem Konstruktionselement herausgleiten. Das Halteelement kann im übrigen beispielsweise zumindest teilweise in Form eines gebogenen Bügels ausgebildet sein, welcher den Rand des Konstruktionselements umgreift, sodass der Verstellkörper in beiden axialen Richtungen am Konstruktionselement fixiert ist.

Wenn in der Mitte des Verstellkörpers ein eine von der Außenverzahnung aufgespannte gedachte Ebene kreuzendes Verbindungselement, insbesondere eine Durchgangsöffnung, ein Schraubbolzen, zumindest ein Sackloch oder ein Lager, angeordnet ist, kann mittels des Verbindungselements ein zur einstellbaren Verbindungsvorrichtung externes Bauteil mit dem Verstellkörper verbunden werden. Das in der Mitte des Vielecks bzw. des Verstellkörpers vorgesehene Verbindungselement kann gegebenenfalls auch in einem Winkel ungleich 90° am bzw. im Verstellkörper angeordnet sein. Je nach Ausführungsform des Verbindungselements kreuzt gegebenenfalls nur die gedachte Verlängerung des Verbindungselements die Ebene.

Um weitere Einstellmöglichkeiten für den Verstellkörper zu schaffen, kann vorgesehen sein, dass die Zähne der Innenverzahnung an einer Längsseite des Langlochs im Vergleich zu den Zähnen an der gegenüberliegenden Längsseite des Langlochs in Richtung der Längserstreckung des Langlochs um einen halben Zahnabstand der Zähne der Innenverzahnung versetzt angeordnet sind. Auf diese Weise kann die Position des Verstellkörpers auch dadurch geändert werden, dass aufgrund seiner Verdrehung der zumindest eine Zahn, der in eine Zahnlücke an der einen Längsseite des Langlochs eingreift, seine Position behält, während zumindest ein anderer Zahn, der für den Eingriff in eine Zahnlücke an der anderen Längsseite des Langlochs vorgesehen ist, in eine der beiden der vorerwähnten Zahnlücke benachbarten Zahnlücken eingreift.

Hinsichtlich einer kostengünstigen Herstellung der einstellbaren Verbindungsvorrichtung und der Zuverlässigkeit der Verbindung zwischen dem Verstellkörper und dem Konstruktionselement kann vorteilhaft vorgesehen sein, dass die Außenverzahnung zumindest teilweise wellenförmig oder die Zähne der Außenverzahnung zumindest teilweise trapezförmig, als Kreissegment oder dreieckig ausgebildet sind.

Zur Erzielung einer stabilen Verbindung zwischen dem Verstellkörper und dem Konstruktionselement kann es zudem günstig sein, wenn für jede Seitenfläche des Vielecks der am weitesten außen liegende Punkt bzw. die am weitesten außen liegende Linie zumindest eines der jeweiligen Seitenfläche zugeordneten Zahns auf dem regelmäßigen Vieleck liegt. Am weitesten außen ist hierbei als von der Mitte des Verstellkörpers ausgehend in Richtung der Normalen auf die jeweiligen Seitenflächen des Vielecks betrachtet zu verstehen. Hierdurch wird der Raum, d.h. das Spiel zwischen einer Zahnlücke der Innenverzahnung und dem jeweiligen darin eingreifenden Zahn der Außenverzahnung gering gehalten.

Wenn die Zähne der Außenverzahnung zumindest teilweise als Kreissegment mit den Kreismittelpunkten an den Seitenflächen eines innerhalb des regelmäßigen Vielecks angeordneten zweiten regelmäßigen Vielecks ausgebildet sind, können die Zähne gleich groß ausgebildet sein und besonders großflächig und mit kontinuierlichem Verlauf, ohne Kantenausbildung, in eine zumindest teilweise kreissegmentförmige Zahnlücke der Innenverzahnung eingreifen.

Die Erfindung wird im Folgenden anhand von bevorzugten, nicht einschränkenden Ausführungsbeispielen unter Bezugnahme auf die Zeichnung noch weiter erläutert. Es zeigen:
Fig. 1A bis 1f in schematischer Draufsicht eine erste Ausführungsform einer einstellbaren Verbindungsvorrichtung gemäß der Erfindung, mit einem Verstellkörper in verschiedenen Winkelpositionen, in einem Langloch eines plattenförmigen Konstruktionselements;
Fig. 2 eine vergrößerte Darstellung des Verstellkörpers aus Fig. 1A bis 1f;
Fig. 3 einen Verstellkörper mit quadratförmiger Grundkontur;
Fig. 4 einen Verstellkörper mit einer zumindest teilweise wellenförmigen Außenverzahnung;
Fig. 5 einen Verstellkörper mit einem Quadrat als regelmäßiges Vieleck, wobei die Zähne der Außenverzahnung zumindest teilweise als Kreissegment ausgebildet sind;
Fig. 6 ein Konstruktionselement mit einem Langloch, dessen Längsseiten um einen halben Zahnabstand der Zähne der Innenverzahnung zueinander versetzt angeordnet sind;
Fig. 7a einen Verstellkörper mit einem Halteelement vor dem Einsetzen in ein Langloch; und
Fig. 7b den in das Langloch eingesetzten Verstellkörper aus Fig. 7a.

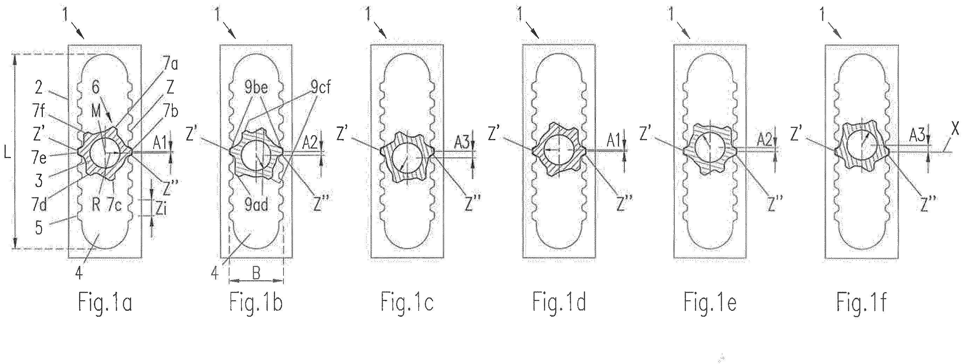

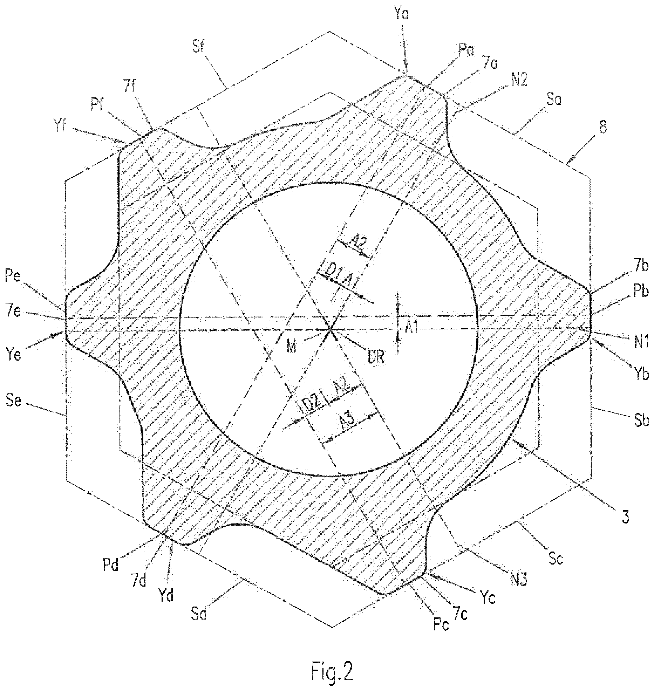

Fig. 1a zeigt eine einstellbare Verbindungsvorrichtung 1 mit einem Konstruktionselement 2, beispielsweise in Form einer Metallplatte, und einem damit verbindbaren, insbesondere darin einsetzbaren Verstellkörper 3. Das Konstruktionselement 2 weist ein Langloch 4 mit einer beidseitigen randseitigen Innenverzahnung 5 auf, und der Verstellkörper 3, welcher in das Langloch 4 an unterschiedlichen Positionen der Längserstreckung L des Langlochs 4 einsetzbar ist, weist eine zum Eingriff in die Innenverzahnung 5 ausgebildete Außenverzahnung 6 auf. Wie deutlicher aus Fig. 2 hervorgeht, verlaufen die Zähne 7a ... 7f der Außenverzahnung 6 entlang eines gedachten, im Wesentlichen regelmäßigen Vielecks 8 um die Mitte M des Verstellkörpers 3, wobei zumindest ein Zahn 7a ... 7f pro Seitenfläche Sa ... Sf des Vielecks 8 vorgesehen ist. Selbstverständlich können unterschiedlichen Seitenflächen Sa ... Sf unterschiedlich viele Zähne 7a ... 7f zugeordnet sein. Demgemäß können insbesondere mehr Zähne Zi als Seitenflächen Sj vorgesehen sein.

Um den Verstellkörper 3 mit dem Konstruktionselement 2 einstellbar verbinden zu können, greift bei jeder von zwei einander gegenüberliegenden Seitenflächen Sa ... Sf des Vielecks 8 zumindest ein Zahn 7a ... 7f in die Innenverzahnung 5 des Langlochs 4 ein, wobei der zumindest eine Zahn 7a ... 7f, der einer Seitenfläche Sa ... Sf zugeordnet ist, und der zumindest eine Zahn 7a ... 7f, der der gegenüberliegenden Seitenfläche Sa ... Sf zugeordnet ist, eine Zahngruppe 9 definieren. In der Ausführungsform gemäß Fig. 1a und 2 würden somit die Zähne 7a, 7d eine erste Zahngruppe 9ad, die Zähne 7b, 7e eine zweite Zahngruppe 9be und die Zähne 7c, 7f eine dritte Zahngruppe 9cf definieren.

Um die Position des Verstellkörpers 3 in Bezug auf das Konstruktionselement 2 durch Verdrehen des Verstellkörpers 3 um seine Drehachse DR zu ändern, ist die Zahngruppe 9ad, 9be, 9cf eines Paars von einander gegenüberliegenden Seitenflächen bzw. eines Seitenflächenpaars Sa, Sd; Sb, Se; Sc, Sf im Vergleich zu einer Zahngruppe 9be, 9cf, 9ad zumindest eines anderen Seitenflächenpaars Sb, Se; Sc, Sf; Sa, Sd in einem unterschiedlichen, um einen jeweiligen Differenzbetrag D1, D2 voneinander abweichenden Abstand A1 ... A3 von einer durch die Mitte M des Verstellkörpers 3 verlaufenden Normalen N1 ... N3 auf die Seitenflächen Sa ... Sf des Vielecks 8 angeordnet. Auf diese Weise entspricht eine Verdrehung des Verstellkörpers 3 einer Verschiebung des im Langloch 4 eingesetzten Verstellkörpers 3 um den jeweiligen Differenzbetrag D1, D2.

Wie Fig. 2 deutlich zeigt, sind die Zähne 7a ... 7f im Wesentlichen trapezförmig ausgebildet, wobei die Kontur des Verstellkörpers 3 zwischen den Zähnen 7a ... 7f einen weitgehend beliebigen Verlauf aufweisen kann. Beispielsweise kann hier ein kreisbogenförmiger Verlauf oder aber ein gerader Verlauf vorgesehen sein.

Im Beispiel der Fig. 1a und 2 sind wie erwähnt die Zahngruppen 9ad, 9be, 9cf aller Seitenflächenpaare Sa, Sd; Sb, Se; Sc, Sf in unterschiedlichen, um einen jeweiligen Differenzbetrag D1, D2 voneinander abweichenden Abständen A1 ... A3 von den durch die Mitte M des Verstellkörpers 3 verlaufenden Normalen N1 ... N3 auf die Seitenflächen Sa ... Sf des Vielecks 8 angeordnet. Insbesondere weist der Differenzbetrag D1, D2 einen vom Zahnabstand Zi der Innenverzahnung 5 unterschiedlichen Wert auf, wobei die Zähne Z der Innenverzahnung 5 entlang der Längserstreckung L des Langlochs 4 gleichmäßig beabstandet sind. Da das gedachte regelmäßige Vieleck 8 des Verstellkörpers 3 in Fig. 1a und 2 ein Sechseck ist, beträgt der jeweilige Differenzbetrag D1, D2 ein Sechstel des Zahnabstands Zi der Innenverzahnung 5. Zudem sind die Zähne 7b, 7e der Zahngruppe 9be in einem Abstand A1 gleich dem Zahnabstand Zi der Innenverzahnung 5 dividiert durch die doppelte Anzahl der Seitenflächen Sa ... Sf, also in einem Abstand A1 von einem Zwölftel des Zahnabstands Zi, von der durch die Mitte M des Verstellkörpers 3 verlaufenden Normalen N1 auf die der Zahngruppe 9be zugeordneten Seitenflächen Sb, Se angeordnet. Auf diese Weise kann der Verstellkörper 3 durch geeignetes Verdrehen und Einsetzen in das Langloch 4 im Wesentlichen entlang des gesamten Langlochs 4 in gleichen Schrittgrößen verstellt werden.

Eine beispielhafte Darstellung der durch Verdrehen des Verstellkörpers 3 erzielbaren Einstellmöglichkeiten geht aus den Fig. 1a bis 1f hervor. Hierbei ist der Verstellkörper 3 jeweils in die selben Zahnlücken Z', Z'' der Innenverzahnung 5 eingesetzt und für jede durch Verdrehen erzielbare Position um jeweils einen Betrag von 360° dividiert durch die Anzahl der Seitenflächen Sa ... Sf verdreht. Fig. 1a zeigt den Verstellkörper 3 in einer ersten Position, angedeutet auch durch den Richtungspfeil R, in welcher der Mittelpunkt M in einem Abstand A1 unterhalb einer Mittelachse X der Zahnlücken Z', Z'' angeordnet ist. In Fig. 1b ist der Verstellkörper 3 um einen Betrag von 60° (im Uhrzeigersinn) weiter verdreht gezeigt, sodass der Mittelpunkt M in einem Abstand A2 = A1 + D1 unterhalb der Mittelachse X angeordnet ist. In Fig. 1c ist der Verstellkörper 3 um weitere 60°, also insgesamt um 120°, verdreht gezeigt, sodass der Mittelpunkt M in einem Abstand A3 = A2 + D2 unterhalb der Mittelachse X angeordnet ist. Fig. 1d zeigt den Verstellkörper 3 um weitere 60° (insgesamt 180°) verdreht, sodass der Mittelpunkt M in einem Abstand A1 oberhalb der Mittelachse X angeordnet ist. In Fig. 1e ist der Verstellkörper 3 um 60° weiter (insgesamt 240°) verdreht gezeigt, sodass der Mittelpunkt M in einem Abstand A2 = A1 + D1 oberhalb der Mittelachse X angeordnet ist; und Fig. 1f zeigt den Verstellkörper 3 erneut um 60° (insgesamt um 300°) verdreht, sodass der Mittelpunkt M in einem Abstand A3 = A2 + D2 oberhalb der Mittelachse X zu liegen kommt. Der Wert von A1 beträgt A1 = Zi / 12, und für die Differenzbeträge D1, D2 gilt D1 = D2 = Zi / 6. Somit sind ausgehend von der jeweiligen Mittelachse X Verschiebungen des Verstellkörpers 3 um die Beträge A1, A2 und A3 in beiden Richtungen der Längserstreckung L des Langlochs 4 möglich.

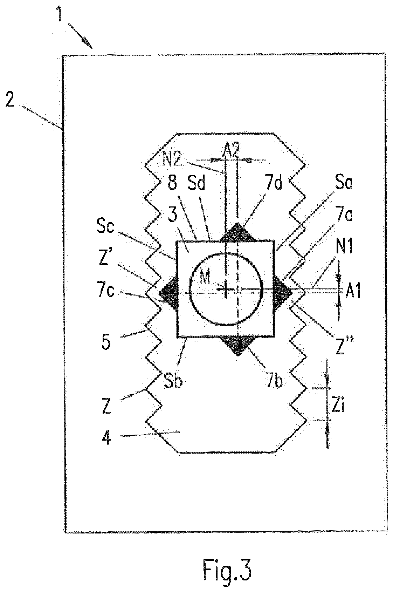

Eine andere Ausführungsform des Verstellkörpers 3 geht aus Fig. 3 hervor, welche den Verstellkörper 3 als Quadrat ausgebildet zeigt, dessen Umfangsseiten mit den Seitenflächen Sa ... Sd des Vielecks 8 zusammenfallen. An den Umfangsseiten bzw. Seitenflächen Sa ... Sd sind einzelne Zähne 7a ... 7d angeordnet, wobei die Zähne 7a, 7c, die eine erste Zahngruppe 9ac definieren, in einem Abstand A1 = Zi / 8 von einer durch den Mittelpunkt M verlaufenden Normalen N1 auf die Seitenfläche Sa, und die Zähne 7b, 7d, die eine zweite Zahngruppe 9bd definieren, in einem Abstand A2 = Zi / (3*8) von einer durch den Mittelpunkt M verlaufenden Normalen N2 auf die Seitenfläche Sb angeordnet sind, mit Zi als Zahnabstand der Innenverzahnung 5.

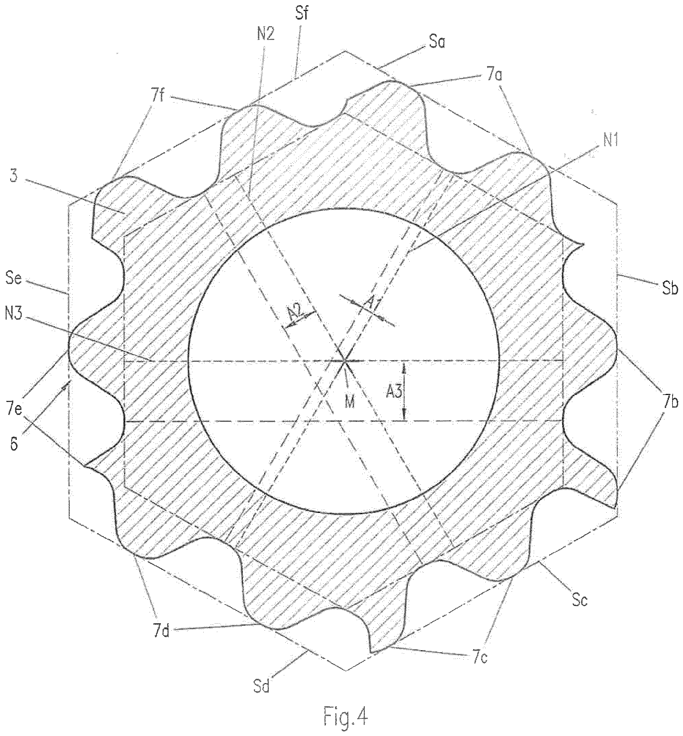

Fig. 4 zeigt einen Verstellkörper 3 mit einer zumindest teilweise wellenförmigen Außenverzahnung 6, wobei auch hier die Außenverzahnung 6 bzw. deren Zähne 7a ... 7f, die den Seitenflächen Sa ... Sf zugeordnet sind, gegenüber den Zähnen 7a ... 7f, die jeder anderen Seitenfläche Sa ... Sf zugeordnet sind, versetzt sind.

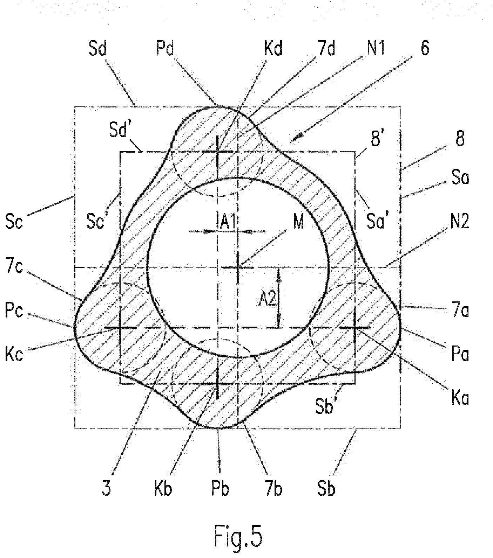

In Fig. 5 ist ein Verstellkörper 3 mit einem Quadrat als regelmäßiges Vieleck 8 dargestellt, wobei die Zähne 7a ... 7d der Außenverzahnung 6 zumindest teilweise als Kreissegment mit den Kreismittelpunkten Ka ... Kd an den Seitenflächen Sa' ... Sd' eines innerhalb des regelmäßigen Vielecks 8 angeordneten zweiten regelmäßigen (hier quadratischen) Vielecks 8' ausgebildet sind. Die Zähne 7a ... 7d sind somit auch dem Vieleck 8' zugeordnet.

Die am weitesten außen liegenden Punkte Pa ... Pd bzw. Linien Ya ... Yf (siehe Fig. 2) der unterschiedlich ausführbaren Zähne 7 eines Verstellkörpers 3 liegen günstiger Weise, aber nicht zwingend, auf dem Vieleck 8.

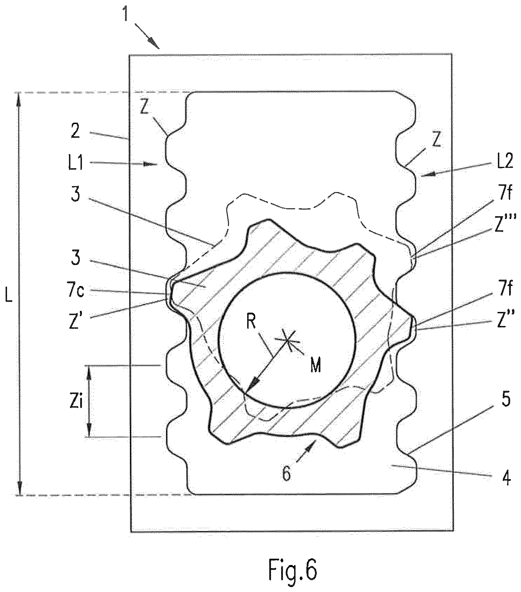

Fig. 6 zeigt ein (plattenförmiges, rechteckiges) Konstruktionselement 2 mit einem Langloch 4, wobei die Zähne Z der Innenverzahnung 5 an einer Längsseite L1 des Langlochs 4 im Vergleich zu den Zähnen Z an der gegenüberliegenden Längsseite L2 des Langlochs 4 in Richtung der Längserstreckung L des Langlochs 4 um einen halben Zahnabstand Zi der Zähne 7 der Innenverzahnung 5 versetzt angeordnet sind. Demnach kann der Verstellkörper 3 von in einer mit durchgehenden Linien dargestellten Position, in welcher der Zahn 7c in die Zahnlücke Z' und der gegenüberliegende Zahn 7f in die Zahnlücke Z'' eingreift, in eine mit unterbrochenen Linien dargestellte Position, in welcher der Zahn 7c nach wie vor in die Zahnlücke Z', jedoch der gegenüberliegende Zahn 7f in die benachbarte Zahnlücke Z''' eingreift, verdreht werden. Auf diese Weise können zusätzliche Einstellmöglichkeiten des Verstellkörpers 3 erzielt werden.

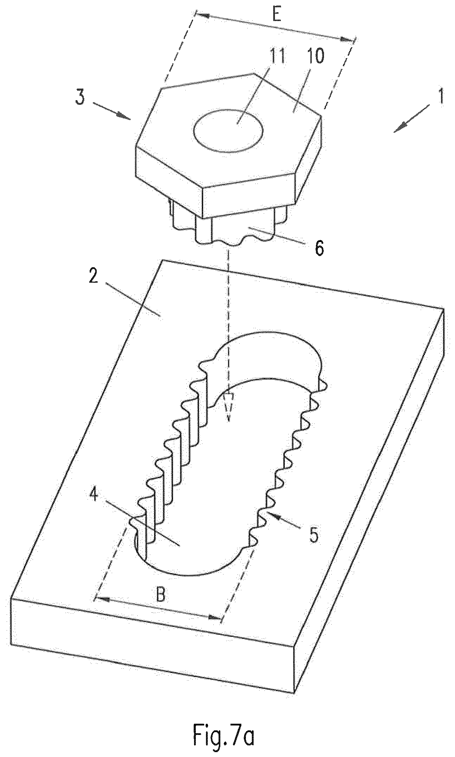

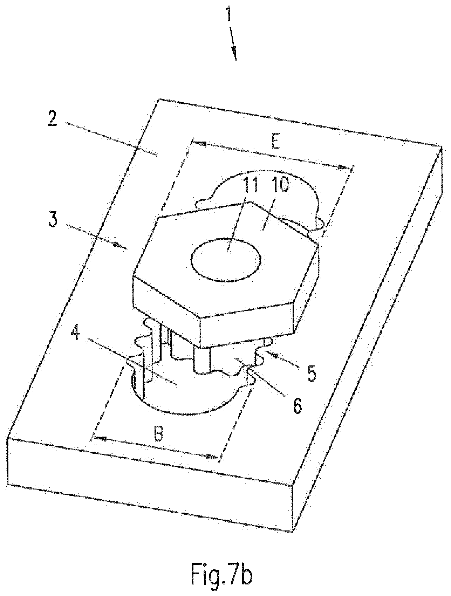

Die Fig. 7a und 7b zeigen einen Verstellkörper 3 (vor und nach dem Einsetzen in ein Langloch 4) mit einem Halteelement oder "Griff" 10, welches plattenförmig ausgebildet ist, wobei dessen Erstreckung E im in das Langloch 4 eingesetzten Zustand zumindest teilweise über die Breite B des Langlochs 4 (siehe auch Fig. 1b) hinausreicht. In der Mitte M des Verstellkörpers 3 bzw. des Halteelements 10 ist eine Durchgangsöffnung bzw. ein Sackloch als Verbindungselement 11 angeordnet, das eine innerhalb der Außenverzahnung 6 aufgespannte, gedachte Ebene kreuzt.

Das Konstruktionselement bzw. die Platte 2 und/oder der Verstellkörper 3 können beispielsweise aus Metall oder Kunststoff, z.B. aus verzinktem Stahl S355, gefertigt sein. Die Längserstreckung L des Langlochs 4 kann beispielsweise in einem Bereich von 3 cm bis 30 cm und die Breite B des Langlochs 4 kann beispielsweise in einem Bereich von 5 mm bis 30 mm liegen.

Die einstellbare Verbindungsvorrichtung 1 kann in jedem Einsatzbereich verwendet werden, der eine einstellbare Positionierung zweiter Körper bzw. Bauteile zueinander erfordert. Insbesondere kann die einstellbare Verbindungsvorrichtung 1 im Bauwesen Anwendung finden, um Spalte zwischen Betonwänden und daran zu befestigenden Fassadenelementen, z.B. Glasfassaden, zu überbrücken, wobei die Spalte fertigungsbedingt unterschiedliche Breiten aufweisen können.

## Patentansprüche

1. Einstellbare Verbindungsvorrichtung (1) mit einem ein Langloch (4) aufweisenden Konstruktionselement (2), welches Langloch (4) randseitig eine Innenverzahnung (5) aufweist, und mit einem in das Langloch (4) an unterschiedlichen Positionen seiner Längserstreckung (L) einsetzbaren Verstellkörper (3) mit einer zum Eingriff in die Innenverzahnung (5) ausgebildeten Außenverzahnung (6), **dadurch gekennzeichnet, dass** die Außenverzahnung (6) Zähne (7a ... 7f) entlang eines gedachten, im Wesentlichen regelmäßigen Vielecks (8) um die Mitte (M) des Verstellkörpers (3) aufweist, wobei zumindest ein Zahn (7a ... 7f) pro Seitenfläche (Sa ... Sf) des Vielecks (8) vorgesehen ist, wobei zumindest ein Zahn (7a ... 7f), der einer Seitenfläche (Sa ... Sf) zugeordnet ist, und zumindest ein Zahn(7a ... 7f), der einer gegenüberliegenden Seitenfläche (Sa ... Sf) des Vielecks (8) zugeordnet ist, eine Zahngruppe (9ad, 9be, 9cf) definieren, die im Vergleich zu einer Zahngruppe (9be, 9cf, 9ad) zumindest eines anderen Paars von einander gegenüberliegenden Seitenflächen (Sa ... Sf) des Vielecks (8) in einem unterschiedlichen, um einen jeweiligen Differenzbetrag (D1, D2) voneinander abweichenden Abstand (A1 ... A3) von einer durch die Mitte (M) des Verstellkörpers (3) verlaufenden Normalen (N1 ... N3) auf die Seitenflächen (Sa ... Sf) des Vielecks (8) angeordnet ist, wobei eine Verdrehung des Verstellkörpers (3) einer Verschiebung des im Langloch (4) eingesetzten Verstellkörpers (3) um den jeweiligen Differenzbetrag (D1, D2) entspricht.

2. Verbindungsvorrichtung (1) nach Anspruch 1, **dadurch gekennzeichnet, dass** die Zahngruppen (9ad, 9be, 9cf) aller Paare von einander gegenüberliegenden Seitenflächen (Sa ... Sf) des Vielecks (8) in unterschiedlichen, um einen jeweiligen Differenzbetrag (D1, D2) voneinander abweichenden Abständen (A1 ... A3) von den durch die Mitte (M) des Verstellkörpers (3) verlaufenden Normalen (N1 ... N3) auf die Seitenflächen (Sa ... Sf) des Vielecks (8) angeordnet sind.

3. Verbindungsvorrichtung (1) nach Anspruch 1 oder 2, **dadurch gekennzeichnet, dass** die Innenverzahnung (5) entlang der Längserstreckung (L) des Langlochs (4) gleichmäßig beabstandete Zähne (Z) mit einem vom jeweiligen Differenzbetrag (D1, D2) verschiedenen Zahnabstand (Zi) aufweist.

4. Verbindungsvorrichtung (1) nach Anspruch 2 und 3, **dadurch gekennzeichnet, dass** der jeweilige Differenzbetrag (D1, D2) gleich dem Zahnabstand (Zi) der Innenverzahnung (5) dividiert durch die Anzahl der Seitenflächen (Sa ... Sf) des Vielecks (8) ist.

5. Verbindungsvorrichtung (1) nach Anspruch 4, **dadurch gekennzeichnet, dass** zumindest ein Zahn (7a ... 7f) einer Zahngruppe (9ad, 9be, 9cf) in einem Abstand (A1) gleich dem Zahnabstand (Zi) der Innenverzahnung (5) dividiert durch die doppelte Anzahl der Seitenflächen (Sa ... Sf), von der durch die Mitte (M) des Verstellkörpers (3) verlaufenden Normalen (N1 ... N3) auf die der Zahngruppe (9ad, 9be, 9cf) zugeordneten Seitenflächen (Sa ... Sf) angeordnet ist.

6. Verbindungsvorrichtung (1) nach einem der Ansprüche 1 bis 5, **dadurch gekennzeichnet, dass** das Vieleck (8) ein regelmäßiges Viereck ist, zwei Zähne (7b, 7d) einer ersten Zahngruppe (9bd), die gegenüberliegenden Seitenflächen (Sb, Sd) eines ersten Paars paralleler Seitenflächen (Sa ... Sd) des Vielecks (8) zugeordnet sind, einen Abstand (A1) von einem Achtel des Zahnabstands (Zi) der Innenverzahnung (5) zu der durch die Mitte (M) des Verstellkörpers (3) verlaufenden Normalen (N1) auf die der ersten Zahngruppe (9bd) zugeordneten Seitenflächen (Sb, Sd) aufweisen, und zwei Zähne (7a, 7c) einer zweiten Zahngruppe (9ac), die gegenüberliegenden Seitenflächen (Sa, Sc) eines zweiten Paars paralleler Seitenflächen (Sa ... Sd) des Vielecks (8) zugeordnet sind, einen Abstand (A2) von drei Achtel des Zahnabstands (Zi) der Innenverzahnung (5) zu der durch die Mitte (M) des Verstellkörpers (3) verlaufenden Normalen (N2) auf die der zweiten Zahngruppe (9ac) zugeordneten Seitenflächen (Sa, Sc) aufweisen.

7. Verbindungsvorrichtung (1) nach einem der Ansprüche 1 bis 5, **dadurch gekennzeichnet, dass** das Vieleck (8) ein regelmäßiges Sechseck ist, zwei Zähne (7b, 7e) einer ersten Zahngruppe (9be), die gegenüberliegenden Seitenflächen (Sa ... Sf) eines ersten Paars paralleler Seitenflächen (Sb, Se) des Vielecks (8) zugeordnet sind, einen Abstand (A1) von einem Zwölftel des Zahnabstands (Zi) der Innenverzahnung (5) zu der durch die Mitte (M) des Verstellkörpers (3) verlaufenden Normalen (N1) auf die der ersten Zahngruppe (9be) zugeordneten Seitenflächen (Sb, Se) aufweisen, zwei Zähne (7a, 7d) einer zweiten Zahngruppe (9ad), die gegenüberliegenden Seitenflächen (Sa, Sd) eines zweiten Paars paralleler Seitenflächen (Sa ... Sf) des Vielecks (8) zugeordnet sind, einen Abstand (A2) von drei Zwölftel des Zahnabstands (Zi) der Innenverzahnung (5) zu der durch die Mitte (M) des Verstellkörpers (3) verlaufenden Normalen (N2) auf die der zweiten Zahngruppe (9ad) zugeordneten Seitenflächen (Sa, Sd) aufweisen, und zwei Zähne (7c, 7f) einer dritten Zahngruppe (9cf), die gegenüberliegenden Seitenflächen (Sc, Sf) eines dritten Paars paralleler Seitenflächen (Sa ... Sf) des Vielecks (8) zugeordnet sind, einen Abstand (A3) von fünf Zwölftel des Zahnabstands (Zi) der Innenverzahnung (5) zu der durch die Mitte (M) des Verstellkörpers (3) verlaufenden Normalen (N3) auf die der dritten Zahngruppe (9cf) zugeordneten Seitenflächen (Sc, Sf) aufweisen.

8. Verbindungsvorrichtung (1) nach einem der Ansprüche 1 bis 7, **dadurch gekennzeichnet, dass** der Verstellkörper (3) ein im Wesentlichen parallel zu einer von der Außenverzahnung (6) aufgespannten Ebene angeordnetes Halteelement (10), insbesondere eine Halteplatte oder Haltestifte, aufweist, dessen bzw. deren Erstreckung (E) im in das Langloch (4) eingesetzten Zustand zumindest teilweise über den Umfang (B) des Langlochs (4) hinausreicht.

9. Verbindungsvorrichtung (1) nach einem der Ansprüche 1 bis 8, **dadurch gekennzeichnet, dass** in der Mitte (M) des Verstellkörpers (3) ein eine von der Außenverzahnung (6) aufgespannte Ebene kreuzendes Verbindungselement (11), insbesondere eine Durchgangsöffnung, ein Schraubbolzen, zumindest ein Sackloch oder ein Lager, angeordnet ist.

10. Verbindungsvorrichtung (1) nach einem der Ansprüche 1 bis 9, **dadurch gekennzeichnet, dass** die Zähne (Z) der Innenverzahnung (5) an einer Längsseite (L1) des Langlochs (4) im Vergleich zu den Zähnen (Z) an der gegenüberliegenden Längsseite (L2) des Langlochs (4) in Richtung der Längserstreckung (L) des Langlochs (4) um einen halben Zahnabstand (Zi) der Zähne (Z) der Innenverzahnung (5) versetzt angeordnet sind.

11. Verbindungsvorrichtung (1) nach einem der Ansprüche 1 bis 10, **dadurch gekennzeichnet, dass** die Außenverzahnung (6) zumindest teilweise wellenförmig oder die Zähne (7a ... 7f) der Außenverzahnung (6) zumindest teilweise trapezförmig, als Kreissegment oder dreieckig ausgebildet sind.

12. Verbindungsvorrichtung (1) nach einem der Ansprüche 1 bis 11, **dadurch gekennzeichnet, dass** für jede Seitenfläche (Sa ... Sf) des Vielecks (8) der am weitesten außen liegende Punkt (Pa ... Pf) bzw. die am weitesten außen liegende Linie (Ya ... Yf) zumindest eines der jeweiligen Seitenfläche (Sa ... Sf) zugeordneten Zahns (7a ... 7f) auf dem regelmäßigen Vieleck (8) liegt.

13. Verbindungsvorrichtung (1) nach einem der Ansprüche 1 bis 12, **dadurch gekennzeichnet, dass** die Zähne (7a ... 7d) der Außenverzahnung (6) zumindest teilweise als Kreissegment mit den Kreismittelpunkten (Ka ... Kd) an den Seitenflächen (Sa' ... Sd') eines innerhalb des regelmäßigen Vielecks (8) angeordneten zweiten regelmäßigen Vielecks (8') ausgebildet sind.

## Claims

1. An adjustable connecting device (1) with a structural element (2) having an elongate hole (4), which elongate hole (4) has an internal tooth system (5) on its edges and with a movable body (3), which is insertable into the elongate hole (4) at different positions along its length (L), with an external tooth system (6) constructed for engagement with the internal tooth system (5), **characterised in that** the external tooth system (6) includes teeth (7a ... 7f) along a hypothetical substantially regular polygon around the centre (M) of the movable body (3), wherein at least one tooth (7a ... 7f) is provided per side surface (Sa ... Sf) of the polygon (8), wherein at least one tooth (7a ... 7f) which is associated with one side surface (Sa ... Sf), and at least one tooth (7a ... 7f), which is associated with an opposite side surface (Sa ... Sf) of the polygon (8) define a tooth group (9ad, 9be, 9cf), which, in comparison to a tooth group (9be, 9cf, 9ad) of at least one other pair of opposite side surfaces (Sa ... Sf) of the polygon is arranged at a spacing (A1 ... A3) differing from one another by a respective differential amount (D1, D2) from a normal (N1 ... N3) to the side surfaces (Sa ... Sf) of the polygon (8) passing through the centre (M) of the movable body (3), wherein rotation of the movable body (3) corresponds to a movement of the movable body (3) inserted into the elongate hole (4) by the respective differential amount (D1, D2).

2. A connecting device (1) as claimed in Claim 1, **characterised in that** the tooth groups (9ad, 9be, 9cf) of all pairs of opposite side surfaces (Sa ... Sf) of the polygon (8) are arranged at distances (A1 ... A3), differing from one another by a respective differential amount (D1, D2), from the normals (N1 ... N3) to the side surfaces (Sa ... Sf) of the polygon (8) extending through the centre (M) of the movable body (3).

3. A connecting device (1) as claimed in Claim 1 or 2, **characterised in that** the internal tooth system (5) includes teeth (Z) uniformly spaced along the length (L) of the elongate hole (4), with a tooth spacing (Zi) different to the respective differential amount (D1, D2).

4. A connecting device (1) as claimed in Claims 2 and 3, **characterised in that** the respective differential amount (D1, D2) is equal to the tooth spacing (Zi) of the internal tooth system (5) divided by the number of the side surfaces (Sa ... Sf) of the polygon (8).

5. A connecting device (1) as claimed in Claim 4, **characterised in that** at least one tooth (7a ... 7f) of one tooth group (9ad, 9be, 9cf) is arranged at a spacing (A1) equal to the tooth spacing (Zi) of the internal tooth system (5) divided by twice the number of the side surfaces (Sa ... Sf), from the normals (N1 ... N3) to the side surfaces (Sa ... Sf) associated with the tooth group (9ad, 9be, 9cf) extending through the centre (M) of the movable body (3).

6. A connecting device (1) as claimed in one of Claims 1 to 5, **characterised in that** the polygon (8) is a regular quadrilateral, two teeth (7b, 7d) of a first tooth group (9bd), which are associated with opposite side surfaces (Sb, Sd) of a first pair of parallel side surfaces (Sa ... Sd) of the polygon (8), have a spacing (A1) of one eighth of the tooth spacing (Zi) of the internal tooth system (5) from the normals (N1) to the side surfaces (Sb, Sd) associated with the first tooth group (9bd) extending through the centre (M) of the movable body (3) and two teeth (7a, 7c) of a second tooth group (9ac), which are associated with opposite side surfaces (Sa, Sc) of a second pair of parallel side surfaces (Sa ... Sd) of the polygon (8), have a spacing (A2) of three eighths of the tooth spacing (Zi) of the internal tooth system (5) from the normals (N2) to the side surfaces (Sa, Sc) associated with the second tooth group (9ac) passing through the centre (M) of the movable body (3).

7. A connecting device (1) as claimed in one of Claims 1 to 5, **characterised in that** the polygon (8) is a regular hexagon, two teeth (7b, 7e) of a first tooth group (9be), which are associated with opposite side surfaces (Sa ... Sf) of a first pair of parallel side surfaces (Sb, Se) of the polygon (8), have a spacing (A1) of one twelfth of the tooth spacing (Zi) of the internal tooth system (5) from the normals (N1) to the side surfaces (Sb, Se) associated with the first tooth group (9be) passing through the centre (M) of the movable body (3), two teeth (7a, 7d) of a second tooth group (9ad), which are associated with opposite side surfaces (Sa, Sd) of a second pair of parallel side surfaces (Sa ... Sf) of the polygon (8), have a spacing (A2) of three twelfths of the tooth spacing (Zi) of the internal tooth system (5) from the normals (N2) to the side surfaces (Sa, Sd) associated with the second tooth group (9ad) passing through the centre (M) of the movable body (3) and two teeth (7c, 7f) of a third tooth group (9cf), which are associated with opposite side surfaces (Sc, Sf) of a third pair of parallel side surfaces (Sa ... Sf) of the polygon (8), have a spacing (A3) of five twelfths of the tooth spacing (Zi) of the inner tooth system (5) from the normals (N3) to the side surfaces (Sc, Sf) associated with the third tooth group (9cf) passing through the centre (M) of the movable body (3).

8. A connecting device (1) as claimed in one of Claims 1 to 7, **characterised in that** the movable body (3) includes a retaining element (10), particularly a retaining plate or retaining pins, arranged substantially parallel to a plane spanned by the external tooth system (6), the length (E) of which extends, in the inserted condition into the elongate hole (4), at least partially beyond the periphery (B) of the elongate hole (4).

9. A connecting device (1) as claimed in one of Claims 1 to 8, **characterised in that** arranged in the centre (M) of the movable body (3) there is a connecting element (11), particularly a through opening, a threaded bolt, at least one blind hole or a bearing, intersecting the plane spanned by the external tooth system (6).

10. A connecting device as claimed in one of Claims 1 to 9, **characterised in that** the teeth (Z) of the internal tooth system (5) are arranged on one longitudinal side (L1) of the elongate hole (4) offset in comparison with the teeth (Z) on the opposite longitudinal side (L2) of the elongate hole (4) in the direction of the length (L) of the elongate hole (4) by one half of the tooth spacing (Zi) of the teeth (Z) of the internal tooth system (5).

11. A connecting device (1) as claimed in one of Claims 1 to 10, **characterised in that** the external tooth system (6) is constructed at least partially of undulating shape or the teeth (7a ... 7f) of the external tooth system (6) are constructed at least partially of trapezium shape, as a circular segment or of triangular shape.

12. A connecting device (1) as claimed in one of Claims 1 to 11, **characterised in that** for each side surface (Sa ... Sf) of the polygon the point (Pa ... Pf) lying furthest outwardly or the line (Ya ... Yf) lying furthest outwardly of at least one tooth (7a ... 7f) associated with the respective side surface (Sa ... Sf) lies on the regular polygon (8).

13. A connecting device (1) as claimed in one of Claims 1 to 12, **characterised in that** the teeth (7a ... 7f) of the external tooth system (6) are constructed at least partially in the form of a circular segment with the centres (Ka ... Kd) of the circles on the side surfaces (Sa' ... Sd') of a second regular polygon (8') arranged within the regular polygon (8).

## Revendications

1. Dispositif de liaison (1) réglable comprenant un élément structural (2) présentant un trou oblong (4), lequel trou oblong (4) présente du côté du bord une denture intérieure (5), le dispositif comprenant également un corps de réglage (3) pouvant être inséré dans le trou oblong (4) dans différentes positions de son étendue longitudinale (L) et pourvu d'une denture extérieure (6) conçue pour s'engrener dans la denture intérieure (5), **caractérisé en ce que** la denture extérieure (6) comprend des dents (7a ... 7f) le long d'un polygone (8) imaginaire, sensiblement régulier, autour du centre (M) du corps de réglage (3), dans lequel au moins une dent (7a ... 7f) est prévue par surface latérale (Sa ... Sf) du polygone (8), dans lequel au moins une dent (7a ... 7f), qui est associée à une surface latérale (Sa ... Sf), et au moins une dent (7a...7f), qui est associée à une surface latérale (Sa...Sf) opposée du polygone (8), définissent un groupe de dents (9ad, 9be, 9cf), qui, en comparaison d'un groupe de dents (9be, 9cf, 9ad) d'au moins une autre paire de surfaces latérales (Sa ... Sf) opposées l'une à l'autre du polygone (8), sont agencées selon un écart (A1 ... A3), divergeant les uns des autres d'une valeur différentielle (D1, D2) respective, par rapport à une normale (N1 ... N3) s'étendant à travers le centre (M) du corps de réglage (3) sur les surfaces latérales (Sa ... Sf) du polygone (8), dans lequel une rotation du corps de réglage (3) correspond à un coulissement du corps de réglage (3) inséré dans le trou oblong (4) de la valeur différentielle (D1, D2) respective.

2. Dispositif de liaison (1) selon la revendication 1, **caractérisé en ce que** les groupes de dents (9ad, 9be, 9cf) de toutes les paires de surfaces latérales (Sa ... Sf) opposées les unes aux autres du polygone (8) sont agencées selon différents écarts (A1 ... A3), divergeant les uns des autres d'une valeur différentielle (D1, D2) respective, par rapport à la normale (N1 ... N3) s'étendant à travers le centre (M) du corps de réglage (3) sur les surfaces latérales (Sa ... Sf) du polygone (8) .

3. Dispositif de liaison (1) selon la revendication 1 ou 2, **caractérisé en ce que** la denture intérieure (5) présente des dents espacées régulièrement le long de l'étendue longitudinale (L) du trou oblong (4) selon un entredent (Zi) différent de la valeur différentielle (D1, D2) respective.

4. Dispositif de liaison (1) selon les revendications 2 et 3, **caractérisé en ce que** la valeur différentielle (D1, D2) respective est identique à l'entredent (Zi) de la denture intérieure (5), divisé par le nombre de surfaces latérales (Sa ... Sf) du polygone (8).

5. Dispositif de liaison (1) selon la revendication 4, **caractérisé en ce qu'**au moins une dent (7a ... 7f) d'un groupe de dents (9ad, 9be, 9cf), selon un écart (A1) identique à l'entredent (Zi) de la denture intérieure (5) divisé par le double des surfaces latérales (Sa ... Sf), par rapport à la normale (N1 ... N3) s'étendant à travers le centre (M) du corps de réglage (3), est agencée sur les surfaces latérales (Sa ... Sf) associées au groupe de dents (9ad, 9be, 9cf).

6. Dispositif de liaison (1) selon l'une quelconque des revendications 1 à 5, **caractérisé en ce que** le polygone (8) est un polygone régulier, deux dents (7b, 7d) d'un premier groupe de dents (9bd), qui sont associées aux surfaces latérales (Sb, Sd) opposées d'une première paire de surfaces latérales (Sa ... Sd) parallèles du polygone (8), présentent un écart (A1) d'un huitième de l'entredent (Zi) de la denture intérieure (5) par rapport à la normale (N1) s'étendant à travers le centre (M) du corps de réglage (3) sur les surfaces latérales (Sb, Sd) associées au premier groupe de dents (9bd), et deux dents (7a, 7c) d'un deuxième groupe de dents (9ac), qui sont associées aux surfaces latérales (Sa, Sc) opposées d'une deuxième paire de surfaces latérales (Sa ... Sd) parallèles du polygone (8), présentent un écart (A2) de trois huitièmes de l'entredent (Zi) de la denture intérieure (5) par rapport à la normale (N2) s'étendant à travers le centre (M) du corps de réglage (3) sur les surfaces latérales (Sa, Sc) associées au deuxième groupe de dents (9ac).

7. Dispositif de liaison (1) selon l'une quelconque des revendications 1 à 5, **caractérisé en ce que** le polygone (8) est un hexagone régulier, deux dents (7b, 7e) d'un premier groupe de dents (9be), qui sont associées aux surfaces latérales (Sa ... Sf) opposées d'une première paire de surfaces latérales (Sb, Se) parallèles du polygone (8), présentent un écart (A1) d'un douzième de l'entredent (Zi) de la denture intérieure (5) par rapport à la normale (N1) s'étendant à travers le centre (M) du corps de réglage (3) sur les surfaces latérales (Sb, Se) tournées vers le premier groupe de dents (9be), deux dents (7a, 7d) d'un deuxième groupe de dents (9ad), qui sont associées aux surfaces latérales (Sa, Sd) opposées d'une deuxième paire de surfaces latérales (Sa ... Sf) parallèles du polygone (8), présentent un écart (A2) de trois douzièmes de l'entredent (Zi) de la denture intérieure (5) par rapport à la normale (N2) s'étendant à travers le centre (M) du corps de réglage (3) sur les surfaces latérales (Sa, Sd) tournées vers le deuxième groupe de dents (9ad), et deux dents (7c, 7f) d'un troisième groupe de dents (9cf), qui sont associées aux surfaces latérales (Sc, Sf) opposées d'une troisième paire de surfaces latérales (Sa ... Sf) parallèles du polygone (8), présentent un écart (A3) de cinq douzièmes de l'entredent (Zi) de la denture intérieure (5) par rapport à la normale (N3) s'étendant à travers le centre (M) du corps de réglage (3) sur les surfaces latérales (Sc, Sf) associées au troisième groupe de dents (9cf).

8. Dispositif de liaison (1) selon l'une quelconque des revendications 1 à 7, **caractérisé en ce que** le corps de réglage (3) comprend un élément de retenue (10), en particulier une plaque de retenue ou une broche de retenue, agencée sensiblement parallèlement à un plan sous-tendu par la denture extérieure (6), et dont l'étendue (E), une fois que ladite plaque ou broche est insérée dans le trou oblong (4), fait saillie au moins en partie de la circonférence (B) du trou oblong (4).

9. Dispositif de liaison (1) selon l'une quelconque des revendications 1 à 8, **caractérisé en ce qu'**un élément de liaison (11) croisant un plan sous-tendu par la denture extérieure (6), en particulier une ouverture de passage, un boulon fileté, au moins un trou borgne ou un palier, est agencé dans le centre (M) du corps de réglage (3).

10. Dispositif de liaison (1) selon l'une quelconque des revendications 1 à 9, **caractérisé en ce que** les dents (Z) de la denture intérieure (5) sur un côté longitudinal (L1) du trou oblong (4), en comparaison des dents (Z) sur le côté longitudinal (L2) opposé du trou oblong (4) en direction de l'étendue longitudinale (L) du trou oblong (4), sont décalées d'un demi entredent (Zi) des dents (Z) de la denture intérieure (5).

11. Dispositif de liaison (1) selon l'une quelconque des revendications 1 à 10, **caractérisé en ce que** la denture extérieure (6) est au moins en partie ondulée ou les dents (7a ... 7f) de la denture extérieure (6) sont au moins en partie trapézoïdales, et réalisées sous la forme d'un segment de cercle ou d'un triangle.

12. Dispositif de liaison (1) selon l'une quelconque des revendications 1 à 11, **caractérisé en ce que**, pour chaque surface latérale (Sa ... Sf) du polygone (8), le point (Pa ... Pf) situé le plus à l'extérieur ou la ligne (Ya ... Yf) située la plus à l'extérieur d'au moins l'une des dents (7a ... 7f) associées à la surface latérale (Sa ... Sf) respective se situe sur le polygone (8) régulier.

13. Dispositif de liaison (1) selon l'une quelconque des revendications 1 à 12, **caractérisé en ce que** les dents (7a ... 7d) de la denture extérieure (6) sont réalisées au moins en partie sous la forme d'un segment de cercle, les centres du cercle (Ka ... Kd) étant situés sur les surfaces latérales (Sa' ... Sd') d'un deuxième polygone (8') régulier agencé à l'intérieur du polygone (8) régulier.
